# EUROPÄISCHE PATENTANMELDUNG

(11) **EP 1 992 433 A2**
(43) Veröffentlichungstag der Anmeldung: **19.11.2008**
(21) Anmeldenummer: 08008964.2
(22) Anmeldetag: 15.05.2008
(51) Int. Cl.: B22D 17/22, B29C 45/37

(54) **Spritzgießform**

(30) Priorität: 16.05.2007 AT 7622007
(71) Anmelder: ifw Manfred Otte GmbH, 4563 Micheldorf (AT)
(72) Erfinder: Kastner, Friedrich, Dr., 4710 Grieskirchen (AT); Ebner, Josef, Ing., 4563 Micheldorf (AT); Otte, Roland, Ing., 4563 Micheldorf (AT)
(74) Vertreter: Landgraf, Elvira

(57) **Zusammenfassung**

Spritzgießform, dadurch gekennzeichnet, dass das Spritzgusswerkzeug physikalisch und/oder chemisch behandelt ist.

## Beschreibung

Die Erfindung betrifft eine Spritzgießform, die eine gute Entformbarkeit des hergestellten Spritzgussteils, unabhängig von dessen stofflicher Zusammensetzung gewährleistet.

Spritzgusswerkzeuge werden je nach Anforderungen aus unterschiedlichen Materialien gefertigt.
So werden zum Beispiel, je nach zu verarbeitendem Werkstoff, die Werkzeuge aus unterschiedlichen Metallen, Stahlsorten, Metalllegierungen, Keramiken, Grauguss, Stahlguss, Schwarzguss, Verbundstoffen, aus geeigneten Kunststoffen oder Metallkombinationen hergestellt.

Die Werkzeuge müssen eine hohe mechanische Beständigkeit, insbesondere Verschleißsicherheit, hohe chemische Beständigkeit, insbesondere Korrosionsbeständigkeit aufweisen und außerdem gut temperierbar sein.

Wie bereits erwähnt, ist die Wahl des Materials für das Werkzeug der Spritzgießform wesentlich auch abhängig von der stofflichen Zusammensetzung der herzustellenden Spritzgussteile.
So ist beispielsweise bei der Verarbeitung von PVC eine hohe Korrosionsbeständigkeit erforderlich.

Ferner lagern sich beim Heißspritzen von Kunststoffen in diesen enthaltene Extrusionshilfsmittel oder Spaltprodukte oder Absplitterungen des Spritzmaterials (Materialpartikel) oft an der Oberfläche des Werkzeugs bzw. an der Trennfläche zwischen Werkzeug und Werkstück ab. Diese Ablagerungen bauen sich nach mehreren Herstellungszyklen auf, das Werkzeug muss aufwendig gereinigt werden. Dadurch wird die Lebensdauer des Werkzeugs zusätzlich verringert.

In jedem Fall muss aber eine gute Entformbarkeit des Spritzgussteils gewährleistet sein.

Aufgabe der Erfindung war es eine Spritzgießform bereitzustellen, die eine gute Entformbarkeit des herzustellenden Spritzgussteils gewährleistet und außerdem eine gute mechanische und chemische Beständigkeit aufweist und leicht gereinigt werden kann.

Gegenstand der Erfindung ist daher eine Spritzgießform, dadurch gekennzeichnet, dass das Spritzgusswerkzeug physikalisch und/oder chemisch behandelt ist.

Das Spritzgusswerkzeug ist nach zu verarbeitendem Werkstoff aus unterschiedlichen Materialsorten, beispielsweise aus Cr/Ni-Stahl 1.2312, 1.2316, 1.2738, 1.2343, 1.4541, 1.4571, aus Legierungen, beispielsweise aus Bronzen oder AI-Legierungen, Mg-Legierungen, Leichtmetall-Legierungen aus hochbeständigen Keramiken, aus Grauguss, Stahlguss oder Schwarzguss und dergleichen hergestellt.

Als Kunststoffe, die im Spritzguss zu Werkstücken verarbeitet werden, kommen beispielsweise Hart- und Weich-PVC, C(chloriertes)-PVC Polyolrefine, bspw. gefüllte oder nicht gefüllte Polypropylene, LDPE, HDPE, MDPE, PPR, PPSU, ABS, PC, PVDF, PSX, Polybutylen, Polybuten, glasfaser-, mineralfaser- oder naturfasergefüllte Kunststoffe oder deren Copolymere, Mischungen oder Blends in Frage. Ferner können Leichtmetalle, wie Mg, AI und dergleichen zu Spritzgussteilen verarbeitet werden.

Insbesondere bei bestimmten Werkstoffen, besonders bei Fittingen, beispielsweise bei der Verarbeitung von hochpolaren Kunststoffen kommt es oft zu Problemen bei der Entformung der Werkstücke.
Ferner bilden sich Ablagerungen an der Oberfläche des Werkzeugs bzw. an der Trennfläche zwischen Werkzeug und Werkstück, die durch entweichende Extrusionshilfsmittel oder Spaltprodukte oder Absplitterungen des Spritzmaterials (Materialpartikel) entstehen.

Um das Problem der schlechten Entformbarkeit der Werkstücke sowie der Ablagerung zu beheben, wird erfindungsgemäß vorgeschlagen die Oberfläche des Spritzgusswerkzeuges physikalisch und/oder chemisch zu behandeln.

Unter physikalischer Behandlung der Oberfläche wird insbesondere eine mechanische Behandlung verstanden, wie beispielsweise polieren mit Polierpaste, elektropolieren, anodisches polieren, bürsten, schleifen, drehen, fräsen, sandstrahlen, beispielsweise mit Glasperlen oder Walnussschalen und dergleichen. Bei den beschriebenen invasiven mechanischen Behandlungen wird die Oberfläche (im Gegensatz zu den Polierverfahren, die eine sehr glatte Oberfläche ergeben) definiert aufgeraut.

Unter chemischer Behandlung der Oberfläche werden hier im Wesentlichen Beschichtungen, die auf die Oberfläche mittels geeigneter Verfahren aufgebracht werden, oder ein Ätzen der Oberfläche verstanden.

Ferner kann das Material aus dem das Spritzgusswerkzeug hergestellt wird, physikalisch oder chemisch behandelt werden, beispielsweise durch Tempern, Härten und dergleichen.

Als Oberflächenbeschichtungen kommen beispielsweise TiN, TiAIN, TiCN, CrN, AICrN, polykristalliner Diamant, Ni, Cr, CrCN und dergleichen in Frage, wobei vorzugsweise Materialkombinationen zum Einsatz kommen.
Weiters kann als Oberflächenbeschichtung eine Metallmatrix oder eine keramische Zusammensetzung aufgebracht sein, wobei in die Matrix beispielsweise Teflon oder Gleitmittel oder Schmiermittel oder weichere Metalle als das Matrixmaterial eingelagert sein können.

Die Wahl der Zusammensetzung der Oberflächenbeschichtung bzw. der Kombination der Materialien der Oberflächenbeschichtung ist abhängig von der stofflichen Zusammensetzung und Vorbehandlung des Werkzeugs aber auch des zu verarbeitenden Materials, insbesondere auch dessen Verarbeitungstemperatur.

Die Schichtdicke der Oberflächenbeschichtung beträgt je nach Material zwischen 0,1 - 25 µm, vorzugsweise 2 - 8 µm.

Vor Aufbringung der Oberflächenbeschichtung wird eine Haftvermittlerschicht aufgebracht.

Dazu wird die Oberfläche mittels eines Plasma-, Corona- oder Flammprozesses behandelt oder chemisch gereinigt oder geätzt oder physikalisch durch Ultraschall gereinigt. Dadurch wird die Oberfläche, auf die anschließend die Beschichtungen aufgebracht werden sollen, aktiviert.
Gleichzeitig mit der Anwendung der Plasma- bzw. Corona- oder Flammbehandlung kann eine dünne Metall- oder Metalloxidschicht als Haftvermittler, beispielsweise durch Sputtern oder Aufdampfen aufgebracht werden. Besonders geeignet sind dabei Cr, Al, Ti, Cu, bzw. deren Oxide. Dadurch wird die anschließend aufgebrachte Oberflächenbeschichtung besser mit der Grundschicht verankert.

Diese Oberflächenbeschichtungen können dann beispielsweise mittels eines PVD- oder CVD - Verfahrens auf die Oberfläche des Werkzeugs aufgebracht werden.
Es ist aber auch möglich die Oberflächenbeschichtung galvanisch oder chemisch auf dem Werkzeug abzuscheiden.

In einem PVD- Verfahren wird die Beschichtung im Vakuum (bis 10⁻¹² mbar, vorzugsweise 10⁻² bis 10⁻⁶ mbar) bei einer vom Dampfdruck und der Dicke der aufzubringenden Beschichtung abhängigen Temperatur auf der Oberfläche des Werkzeugs beispielsweise durch thermisches Verdampfen, Lichtbogen- oder Elektronenstrahlverdampfen abgeschieden.

Eine weitere Möglichkeit ist das Aufbringen der Beschichtung durch AC- oder DC-Sputtern, wobei je nach Dicke der aufzubringenden Schicht und eingesetztem Material das entsprechende Verfahren gewählt wird.

In einem CVD-Verfahren wird durch Mischen des aufzubringenden Stoffs mit einem Gas, Plasma oder mit einem Aktivierungsgas, beispielsweise CO, CO₂, Sauerstoff, Silane, Methan, Ammoniak und dergleichen eine chemische Reaktion hervorgerufen und der entstandene Stoff auf der Werkzeugoberfläche abgeschieden.
Ferner kann das Material auch durch Flammspritzen aufgebracht werden Dabei werden in unterschiedlichen Bereichen des Spritzgusswerkzeugs unterschiedliche Beschichtungen nebeneinander oder übereinander aufgebracht. So wird beispielsweise im Formnest eine Beschichtung aufgebracht, die die Haftung des Spritzgussteils an der Form verringert, wobei hier vorzugsweise Beschichtungen aus CrNi, TiC oder TiN in Frage kommen.
Ebenso können keramische Beschichtungen aufgebracht werden.

Im Angussbereich und am Kern werden vorzugsweise Oberflächenbeschichtungen ggf. auch als Materialkombinationen aufgebracht, die die Gleitfähigkeit der zu verarbeitenden Masse erhöhen und gleichzeitig die Oberfläche des Werkzeugs härten, beispielsweise TiN, Cr-Teflon, Ni-Teflon.

Das Verfahren kann aber auch so geführt werden, dass die Oberfläche des Werkzeugs durch Implantieren von Ionen mittels Plasma oder Ionenquellen in das Werkzeugmaterial modifiziert wird.

Gegebenenfalls können durch diese Verfahren auch mehrere gleich oder unterschiedliche zusammengesetzte Schichten aufgebracht sein. Ferner können auch unterschiedliche Schichten nebeneinander aufgebracht sein. Dabei können die Schichten jeweils durch Maskierung der nicht zu beschichtenden Bereiche oder durch Verwendung von Blenden in definierten Bereichen aufgebracht werden

In einer besonderen Ausführungsform kann die Oberfläche des Werkzeugs sowohl mechanisch als auch chemisch behandelt werden.

Durch die erfindungsgemäß vorgeschlagene Behandlung der Oberfläche des Werkzeugs wird die Haftung der Werkzeugsoberfläche zur Oberfläche des hergestellten Werkstücks verringert und damit die Entformbarkeit deutlich verbessert.

Beim Spritzgießen von Kunststoffen entweichen die in der Kunststoffmasse vorhandenen Extrusionshilfsmittel, lagern sich durch die erfindungsgemäße Oberflächenbehandlung des Werkzeugs aber nicht an der Oberfläche an. Ferner lagern sich Spaltprodukte oder Absplitterungen der zur verarbeitenden Masse weniger bis kaum an der Oberfläche des Werkzeugs an, da das Fließverhalten dadurch verbessert wird. Dadurch werden die notwendigen Reinigungsintervalle verlängert, die Lebensdauer des Werkzeugs deutlich erhöht.
Zusätzlich können die Ablagerungen durch Einleiten von Spülgas (wie Stickstoff, Argon oder Luft) weiter verringert werden.

Ferner wird durch die erfindungsgemäße Oberflächenbehandlung auch die Korrosionsbeständigkeit des Werkzeugs erhöht.

Zur Entformung kann dann zwischen Werkstück und den formgebenden Oberflächen des Werkzeugs Gas oder Flüssigkeit eingeleitet werden, das Werkstück löst sich leicht von der Form.

## Patentansprüche

1. Spritzgießform, **dadurch gekennzeichnet, dass** das Spritzgusswerkzeug physikalisch und/oder chemisch behandelt ist.

2. Spritzgießform nach Anspruch 1, **dadurch gekennzeichnet, dass** das Spritzgusswerkzeug aus Metallen, Metalllegierungen, wie Stahl, Bronzen oder Al-Legierungen, Mg-Legierungen, Leichtmetall-Legierungen aus hochbeständigen Keramiken, aus Grauguss, Stahlguss oder Schwarzguss besteht.

3. Spritzgießform nach einem der Ansprüche 1 oder 2, **dadurch gekennzeichnet, dass** die physikalische Behandlung eine mechanische Behandlung ist.

4. Spritzgießform nach Anspruch 3, **dadurch gekennzeichnet, dass** die mechanische Behandlung durch polieren mit Polierpaste, elektropolieren, anodisches polieren, bürsten, schleifen, drehen, fräsen, sandstrahlen, beispielsweise mit Glasperlen oder Walnussschalen oder CO₂ durchgeführt wird.

5. Spritzgießform nach einem der Ansprüche 1 bis 2, **dadurch gekennzeichnet, dass** als chemische Behandlung eine Oberflächenbeschichtung aufgebracht ist oder die Oberfläche geätzt ist.

6. Spritzgießform nach Anspruch 5, **dadurch gekennzeichnet**, das unter der Oberflächenbeschichtung eine Haftvermittlerschicht aufgebracht ist.

7. Spritzgießform nach Anspruch 5 oder 6, **dadurch gekennzeichnet, dass** die Oberflächenbeschichtungen in unterschiedlichen Bereichen des Spritzgusswerkzeugs unterschiedlich sind und aus TiN, TiAIN, TiCN, CrN, AlCrN, polykristallinem Diamant, Ni, Cr, CrCN oder einer Metallmatrix oder einer keramischen Zusammensetzung, in die Gleitmittel oder Schmiermittel eingelagert sind, besteht.

8. Spritzgießform nach einem der Ansprüche 5 bis 7, **dadurch gekennzeichnet, dass** die Oberflächenbeschichtung eine Dicke von 0,1 µm bis 2 µm aufweist.

9. Spritzgießform nach einem der Ansprüche 5 bis 8, **dadurch gekennzeichnet, dass** als Oberflächenbeschichtung mehrere gleich oder unterschiedlich zusammengesetzte Schichten nebeneinander oder übereinander aufgebracht sind.

10. Spritzgießform nach einem der Ansprüche 5 bis 9, **dadurch gekennzeichnet, dass** die Oberflächenbeschichtung durch ein PVD-, CVD- Verfahren, durch Sputtern, oder durch galvanische oder chemische Abscheidung aufgebracht ist.

11. Spritzgießform nach einem der Ansprüche 1 bis 10, **dadurch gekennzeichnet, dass** die Oberfläche des Spritzgießwerkzeugs durch Implantieren von Ionen modifiziert ist.

12. Verwendung einer Spritzgießform nach einem der Ansprüche 1 bis 11 zur Herstellung von Fittingen.
